# EUROPÄISCHE PATENTANMELDUNG

(11) **EP 4 272 990 A1**
(43) Veröffentlichungstag der Anmeldung: **08.11.2023**
(21) Anmeldenummer: 23169403.5
(22) Anmeldetag: 24.04.2023
(51) Int. Cl.: B60L 53/10, B60L 53/14, B60L 55/00, B60L 53/50

(54) **ERGÄNZUNGSLADEVORRICHTUNG FÜR EINE AC-WALLBOX SOWIE AC-DC-WALLBOX MIT EINER DERARTIGEN ERGÄNZUNGSLADEVORRICHTUNG**

(30) Priorität: 02.05.2022 DE 102022110650
(71) Anmelder: AUDI AG, 85057 Ingolstadt (DE); Hager-Electro SAS, 67210 Obernai (FR)
(72) Erfinder: Dehm, Martin, 86653 Monheim (DE); Reiner, Ulrich, 67691 Hochspeyer (DE)
(74) Vertreter: Hofstetter, Schurack & Partner

(57) **Zusammenfassung**

Die Erfindung betrifft eine Ergänzungsladevorrichtung (74) für eine AC-Wallbox (82) umfassend:
- ein Gehäuse (92);
- eine in dem Gehäuse (92) angeordnete Steuervorrichtung (76);
- einen ersten Anschluss (40), der mit einem Ladestecker (54a) eines AC-DC-Ladekabels (46) koppelbar ist, wobei der erste Anschluss (40) einen AC-Anschluss (44) und einen DC-Anschluss (42) umfasst;
- einen zweiten Anschluss (78) zum Koppeln mit einem AC-Ausgang (80) der AC-Wallbox (82) über ein AC-Ladekabel (84), wobei die Steuervorrichtung (76) ausgelegt ist, den zweiten Anschluss (78) mit dem AC-Anschluss (44) des ersten Anschlusses (40) zu koppeln;
- einen zumindest monodirektional ausgebildeten DC/AC-Wandler (52),
wobei die Steuervorrichtung (76) ausgelegt ist, in einem ersten Betriebsmodus dessen AC-Anschluss mit dem zweiten Anschluss (78) zu koppeln und dessen DC-Anschluss mit dem DC-Anschluss (42) des ersten Anschlusses (40) zu koppeln, so dass über den DC-Anschluss des DC/AC-Wandlers (52) eingekoppelte Leistung am zweiten Anschluss (78) bereitstellbar ist.

Die Erfindung betrifft weiterhin eine AC-DC-Wallbox (94) umfassend eine derartige Ergänzungsladevorrichtung (74).

## Beschreibung

Die vorliegende Erfindung betrifft eine Ergänzungsladevorrichtung für eine AC-Wallbox sowie eine AC-DC-Wallbox umfassend eine derartige Ergänzungsladevorrichtung.

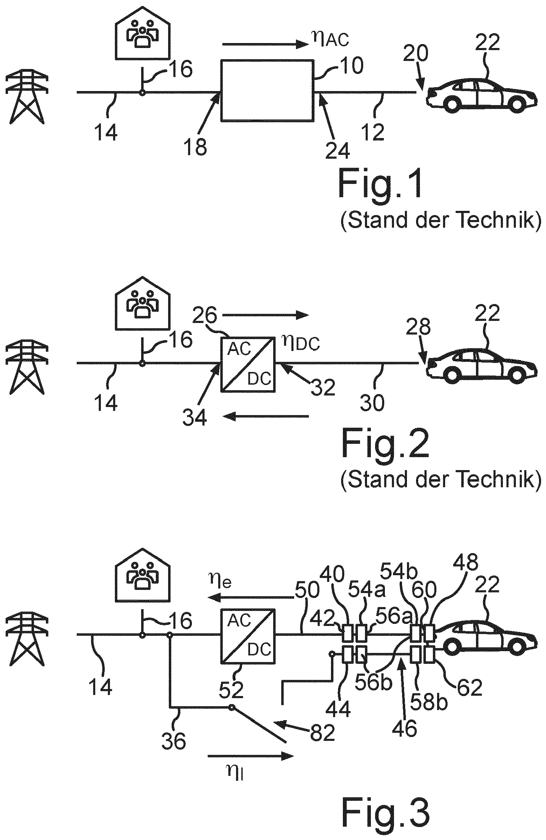

Die vorliegende Erfindung betrifft ganz allgemein das Laden von Elektrofahrzeugen. Fig. 1 zeigt in diesem Zusammenhang schematisch das heute vorrangig verwendete Konzept, welches als AC-Laden bezeichnet wird, wobei mittels einer AC-Wallbox 10 und eines AC-Ladekabels 12 Energie aus einem öffentlichen Netzanschluss 14 oder einem Hausanschluss 16, der mit einem Eingang 18 der AC-Wallbox 10 gekoppelt ist, an einen Ladeanschluss 20 eines Kraftfahrzeugs 22 übertragen wird. Um die am Ladeanschluss 20 bereitgestellte AC-Leistung in einer Fahrzeugbatterie zu speichern, ist ein im Kraftfahrzeug 22 angeordneter OnBoard-Charger vorgesehen, der einen AC-DC-Wandler umfasst, dessen Nennladeleistung üblicherweise 11 kW oder 22 kW beträgt. Entsprechend wird am Ausgang 24 der AC-Wallbox 10 eine Nennleistung von 11 kW oder 22 kW bereitgestellt. Die AC-Wallbox 10 umfasst in bekannter Weise insbesondere eine Steuer- und Schutzvorrichtung, die jedoch in Fig. 1 der Übersichtlichkeit halber nicht dargestellt ist. Bei der Nennleistung beträgt der Wirkungsgrad η_{AC} der AC-Wallbox üblicherweise deutlich über 97%, der eines OnBoard-Chargers zwischen 93 und 96 %.

Ein weiteres aus dem Stand der Technik bekanntes Konzept ist das sogenannte DC-Laden. Wie in diesem Zusammenhang in Fig. 2 dargestellt, umfasst eine DC-Wallbox 26 einen AC/DC-Wandler, der ebenfalls für eine Nennladeleistung ausgelegt ist. Bei monodirektionaler Auslegung des AC/DC-Wandlers (nicht dargestellt) beträgt die Nennleistung beim sogenannten Schnellladen, welches beispielsweise an Autobahnen bereitgestellt wird, zwischen 50 kW und 350 kW. Im halböffentlichen Verkehrsraum gibt es erste verfügbare Produkte mit Nennladeleistungen von 11 kW und 22 kW.

Gemäß Fig. 2 ist zum Laden des Fahrzeugs 22 am Fahrzeug 22 ein DC-Ladeanschluss 28 vorgesehen, der über ein DC-Ladekabel 30 mit dem Ausgang 32 der DC-Wallbox 26 gekoppelt ist. Der Eingang der DC-Wallbox 26 ist mit 34 bezeichnet und mit einem öffentlichen Netzanschluss 14 oder einem Hausanschluss 16 gekoppelt. Wie in Fig. 2 weiter dargestellt ist, kann die DC-Wallbox 26 für bidirektionales Laden ausgelegt sein, das heißt das Fahrzeug 22 kann als mobiler Speicher dienen, um beispielsweise in einer Fahrzeugbatterie des Fahrzeugs 22 zwischengespeicherte Energie wieder in ein Hausnetz oder ein Stromnetz zurückzuspeisen. Diese Vorgehensweise kommt insbesondere zum Zwischenspeichern von Energie aus einer Photovoltaikanlage in Betracht. Der Wirkungsgrad des bidirektional arbeitenden AC-DC-Wandlers ist mit η_{DC} bezeichnet und beträgt im Ladebetrieb bei Nennleistung üblicherweise 93 bis 96%.

Aus dem Stand der Technik ist weiterhin eine Ladestation bekannt, die von der Firma Ford unter der Bezeichnung "Ford Charge Station Pro" vertrieben wird. Diese ermöglicht bidirektionales Laden, um einen Batteriespeicher eines Fahrzeugs bei Stromausfällen als Stromerzeugungsquelle zu nutzen. Die Nennleistung beträgt 19,2 kW im AC-Ladebetrieb, das heißt beim Laden des Batteriespeichers des Fahrzeugs aus eine AC-Quelle. Im Entladebetrieb kann der Fahrzeugbatterie eine Leistung von bis zu 9,6 kW entnommen werden. Zum Einspeisen der entnommenen DC-Leistung in ein Hausnetz ist die Ladestation mit einem Wechselrichter einer Photovoltaikanlage (PV) mit galvanischer Trennung zu koppeln. Die Nennleistung von PV-Wechselrichtern beträgt üblicherweise in der Größenordnung von 8 bis 12 kW.

Aus der DE 10 2018 113 174 A1 ist ein Ladegerät zum Energieaustausch zwischen einem Versorgungsnetz an einer Ladestation und einer Batterie eines Elektrofahrzeugs bekannt, wobei das Ladegerät einen Versorgungsnetzanschluss und einen Batterieanschluss aufweist, wobei an seinem Versorgungsnetzanschluss ein erster Matrixumrichter und an seinem Batterieanschluss ein zweiter Matrixumrichter vorgesehen ist. Das Ladegerät weist zwischen den beiden Matrixumrichtern einen N-phasigen Hochfrequenztransformator auf, wobei die Matrixumrichter jeweils eine Anzahl N mal N bidirektionaler Leistungshalbleiterschalter umfassen. Das Ladegerät weist ein Steuergerät auf, welches dazu konfiguriert ist, mit einer Auswahl aus einer Vielzahl programmierter Steuerungsverfahren die bidirektionalen Leistungshalbschalter gemäß vorbestimmten Anforderungen an einen Versorgungsstrom beziehungsweise Netzstabilisierungsstrom und Ladestrom beziehungsweise Entladestrom zu schalten, wobei das Ladegerät wahlweise an der Ladestation oder an dem Elektrofahrzeug angeordnet werden kann.

Die Aufgabe der vorliegenden Erfindung besteht darin, ein verbessertes, resourcenschonendes Lade- und Entladekonzept bereitzustellen. Dieses soll sich möglichst kostengünstig umsetzen lassen.

Diese Aufgabe wird gelöst durch eine Ergänzungsladevorrichtung mit den Merkmalen von Patentanspruch 1 sowie eine AC-DC-Wallbox umfassend eine derartige Ergänzungsladevorrichtung gemäß Patentanspruch 9.

Die vorliegende Erfindung basiert auf der Erkenntnis, dass der wesentliche Nachteil des in Fig. 2 dargestellten Konzepts darin besteht, dass der darin zum Laden verwendete AC/DC-Wandler für eine Nennleistung im Ladebetrieb ausgelegt ist und sich deshalb Wirkungsgrade η von 90 und mehr Prozent nur beim Laden eines Fahrzeugs ergeben. Während die Nennleistung im Ladebetrieb 11 kW oder 22 kW beträgt, findet der Entladevorgang, beispielsweise bei Nutzung des Batteriespeichers des Fahrzeugs als mobiler Heimspeicher, abhängig von der Hausverbrauchsleistung statt. Der Grundverbrauch von vielen modernen Häusern liegt bei zirka 100 bis 300 Watt. Da der Wirkungsgrad η über dem Quotienten aus der tatsächlichen Leistung P und der Nennleistung Pₙₒₘ hyperbelförmig verläuft, können mit den aus dem Stand der Technik bekannten Maßnahmen im Entladebetrieb nur sehr geringe Wirkungsgrade erzielt werden. Wird beispielsweise eine DC-Wallbox gemäß Fig. 2 auf eine Nennleistung von 11 kW im Ladebetrieb dimensioniert, beträgt der Wirkungsgrad im Endladebetrieb bei einer Entladeleistung von 0,5 kW lediglich noch 65 Prozent. Wird die DC-Wallbox verwendet, um einen Fahrzeugspeicher mit nicht in einem Haus benötigter Leistung einer Photovoltaik-Anlage zu laden, ist im Ladebetrieb je nach Sonneneinstrahlung der Wirkungsgrad ebenfalls niedrig, da die Nennleistung, insbesondere bei üblicher 10kWpeak-Auslegung, bei weitem nicht erreicht wird.

Der Nachteil der Ford Charge Station Pro besteht darin, dass eine Photovoltaikanlage vorhanden sein muss, um deren Wechselrichter, insbesondere einen mit galvanischer Trennung, zum Wandeln von DC-Leistung in AC-Leistung zu nutzen. Dieser wird dann um eine AC-Wallbox ergänzt, um ein Fahrzeug aus einer AC-Quelle laden zu können. Damit ist die Auslegung der DC/AC-Wandlung vorgegeben, die demnach bestimmt wird durch die Leistung der Sonnenkollektoren der Photovoltaikanlage. Wechselrichter ohne galvanische Trennung können überdies nicht verwendet werden. Ein Freiheitsgrad zur Optimierung einer DC-Entladung aus einem Fahrzeugspeicher in ein AC-Versorgungsnetz, beispielsweise im Hinblick auf einen durchschnittlichen Hausverbrauch, liegt nicht vor. Bei der Ford Charge Station Pro ist dieser Nachteil akzeptabel, da ein Einsatz lediglich als Notstromversorgung vorgesehen ist, nicht jedoch ein regelmäßiger, resourcenschonender Betrieb, wie ihn sich die vorliegende Erfindung zum Ziel gesetzt hat.

In seiner einfachsten Ausgestaltung sieht deshalb die vorliegende Erfindung zwei antiparallele Strompfade vor, nämlich einen Ladepfad und einen Entladepfad, die hinsichtlich der im jeweiligen Pfad maßgeblichen Nennleistung und damit leistungsmäßig unterschiedlich dimensioniert werden können. Damit lässt sich ein optimaler Wirkungsgrad sowohl im Ladebetrieb als auch im Entladebetrieb realisieren. Aufgrund der Auslegung des DC-Entladepfads auf eine niedrigere Nennleistung sind die dafür benötigten Bauelemente günstiger und der benötigte Bauraum kleiner. Besonders vorteilhaft macht sich bemerkbar, dass aufgrund des hohen Wirkungsgrads die Verlustleistung niedrig ist und deshalb auf Kühlungsmaßnahmen wie Lüfter, Kühlflüssigkeit oder Kühlelemente verzichtet werden kann.

Besonders kostengünstig lässt sich dieses Konzept umsetzen durch eine erfindungsgemäße Ergänzungsladevorrichtung für eine AC-Wallbox, die als Ergänzung einer bereits vorhandenen, das heißt installierten, AC-Wallbox Anwendung finden kann. Eine derartige erfindungsgemäße Ergänzungsladevorrichtung für eine AC-Wallbox umfasst ein Gehäuse, eine in dem Gehäuse angeordnete Steuervorrichtung, einen ersten Anschluss zum Koppeln mit einem Ladeanschluss eines Fahrzeugs, wobei der erste Anschluss einen AC-Anschluss und einen DC-Anschluss umfasst, einen zweiten Anschluss zum Koppeln mit einem AC-Ausgang der Wallbox über ein AC-Ladekabel, wobei die Steuervorrichtung ausgelegt ist, den zweiten Anschluss mit dem AC-Anschluss des ersten Anschlusses zu koppeln, sowie einen zumindest monodirektional ausgebildeten DC/AC-Wandler, wobei die Steuervorrichtung ausgelegt ist, in einem ersten Betriebsmodus dessen AC-Anschluss mit dem zweiten Anschluss zu koppeln und dessen DC-Anschluss mit dem DC-Anschluss des ersten Anschlusses zu koppeln, sodass über den DC-Anschluss des DC/AC-Wandlers eingekoppelte Leistung am zweiten Anschluss bereitstellbar ist.

Die vorliegende Erfindung ermöglicht eine Nachrüstung vorhandener AC-Wallboxen, um einen Batteriespeicher eines Fahrzeugs unter Bereitstellung eines hohen Wirkungsgrads sowohl beim Laden als auch beim Entladen - und damit umwelt- und resourcenschonend - als Zwischenspeicher zu nutzen.

Der AC-Anschluss des ersten Anschlusses umfasst bevorzugt alle drei Phasen L1, L2, L3, einen Neutralleiter N, einen Schutzleiter PE, einen Signalkontakt CP (Control Pilot) und einen Annäherungskontakt PRX (Proximity Pilot). Der DC-Anschluss des ersten Anschlusses umfasst einen Leiter für DC+ und einen für DC- und nutzt ebenfalls die Anschlüsse PE, CP und PRX.

Der erste Betriebsmodus dient primär der DC-Entladung eines Batteriespeichers eines Fahrzeugs.

Die Steuervorrichtung ist bevorzugt ausgebildet, in einem zweiten Betriebsmodus am zweiten Anschluss eingekoppelte Leistung am AC-Anschluss des ersten Anschlusses bereitzustellen. Dieser Betriebsmodus dient demnach dem herkömmlichen AC-Laden eines Batteriespeichers eines Fahrzeugs.

Durch eine monodirektionale Ausbildung des DC/AC-Wandlers lässt sich dieser besonders kostengünstig realisieren und ermöglicht dennoch die Ausführung des ersten und des zweiten Betriebsmodus.

Die Ergänzungsladevorrichtung ist bevorzugt zum Laden einer mit dem AC-Anschluss des ersten Anschlusses gekoppelten Speichervorrichtung, insbesondere im zweiten Betriebsmodus, auf eine erste Nennleistung ausgelegt, wobei die Ergänzungsladevorrichtung weiterhin zum Entladen einer mit dem DC-Anschluss des ersten Anschlusses gekoppelten Speichervorrichtung, insbesondere im ersten Betriebsmodus, auf eine zweite Nennleistung ausgelegt ist, wobei die erste Nennleistung größer ist als die zweite Nennleistung, wobei die erste Nennleistung insbesondere zwischen 11 und 22 kW beträgt und die zweite Nennleistung insbesondere zwischen 200 W und 5 kW. Bevorzugt liegt die zweite Nennleistung innerhalb eines Nennleistungsbereichs mit einer unteren Nennleistungsbereichsschwelle zwischen 200 W und 500 W und einer oberen Nennleistungsbereichsschwelle zwischen 2 kW und 5 kW. Die zweite Nennleistung wird insbesondere für einen Arbeitsbereich zwischen 200 W und 5 kW, noch bevorzugter für einen Arbeitsbereich zwischen 200 W und 2 kW, gewählt, so dass der für die Dimensionierung relevante Betrag der zweiten Nennleistung innerhalb der angegebenen Arbeitsbereiche liegt.

Der Unterschied zwischen den beiden Nennleistungen im Lade- und Entladebetrieb beträgt daher mehr als den Faktor 2. Wie leicht zu erkennen ist, sind demnach die zwei antiparallel verlaufenden Pfade für deutlich unterschiedlich Nennleistungen ausgelegt, wobei der Begriff "Auslegung" bedeutet, dass eine Dimensionierung der für die Umsetzung benötigten elektronischen Komponenten auf diese Nennleistung erfolgt. Dadurch lässt sich sowohl im ersten Betriebsmodus als auch im zweiten Betriebsmodus ein Wirkungsgrad von über 85 Prozent, ohne Weiteres sogar von mehr als 90% erzielen. Würde der Entladepfad auf dieselbe Nennleistung dimensioniert wie der Ladepfad, so würde der Entladepfad lediglich einen Wirkungsgrad von kleiner 65 Prozent ermöglichen. Durch die Auftrennung von Lade- und Entladepfad und die Dimensionierung auf die jeweilige Nennleistung lässt sich somit ein Wirkungsgradunterschied beim Entladen von mindestens 20 Prozent realisieren. Wird der Entladepfad beim Entladen mit einer Leistung betrieben, die deutlich unter der oben genannten Nennleistung liegt, beispielsweise 300 Watt, so lässt sich bei der vorgeschlagenen Dimensionierung noch ein ausreichender Wirkungsgrad für einen sinnvollen Betrieb erzielen, wohingegen bei gleicher Dimensionierung von Lade- und Entladepfad bei derartigen Leistungen aufgrund des dann sehr niedrigen Wirkungsgrads im Entladebetrieb in der Größenordnung von kleiner 20 Prozent ein sinnvoller Einsatz nicht mehr möglich ist.

Bevorzugt ist der erste Anschluss ausgebildet, in einem einzigen Steckvorgang mit dem Ladestecker eines AC-DC-Kabels gekoppelt zu werden. Mit anderen Worten ist trotz Bereitstellung eines ersten Anschlusses mit Kontakten zur AC- und DC-Übertragung nur ein einziger Steckvorgang nötig, um sowohl die AC- Kontakte des AC-Anschlusses als auch die DC-Kontakte des DC-Anschlusses mit einem Stecker oder einer Buchse des AC-DC-Ladekabels zu kontaktieren. Derselbe Vorgang findet ein zweites Mal statt und zwar zum Koppeln des AC-DC-Ladekabels mit einem Ladeanschluss eines Fahrzeugs, ebenfalls in einem einzigen Steckvorgang.

Alternativ kann vorgesehen werden, dass die Ergänzungsladevorrichtung bereits ein AC-DC-Ladekabel umfasst, wobei das AC-DC-Ladekabel einen Anschluss als den ersten Anschluss aufweist, der ausgebildet ist, in einem einzigen Steckvorgang mit einem Ladeanschluss eines Fahrzeugs gekoppelt zu werden

Wie bereits erwähnt, kann der DC-AC-Wandler nur monodirektional betreibbar ausgebildet sein. Für weitere Betriebsmodi ist es jedoch von Vorteil, wenn er bidirektional betreibbar ausgebildet ist.

Während bei einer monodirektionalen Auslegung des DC-AC-Wandlers Leistung nur über den AC-Pfad an einen Batteriespeicher eines Fahrzeugs übertragen werden kann, wobei zur Gleichrichtung ein sogenannter Onboard-Charger des Fahrzeugs Anwendung findet, welcher einen entsprechend ausgelegten AC-DC-Wandler umfasst, ermöglicht eine bidirektionale Auslegung des DC-AC-Wandlers eine Ladung des Fahrzeugspeichers unter Verwendung des DC-AC-Wandlers der erfindungsgemäßen Ergänzungsladevorrichtung als AC-DC-Wandler. Da bei Betrieb eines OnBoard-Chargers diverse am Ladevorgang beteiligte Vorrichtungen des Fahrzeugs in Betrieb gesetzt werden müssen, beispielsweise Kühlung, Kommunikationsvorrichtungen, Steuer- und Überwachungsvorrichtungen, ermöglicht eine Gleichrichtung seitens der Ergänzungsladevorrichtung den Betrieb dieser benötigten Vorrichtungen im Fahrzeug zu vermeiden. Stattdessen werden entsprechende Vorrichtungen an einer Stelle und zwar außerhalb des Fahrzeugs durch Versorgung aus einem Netz- oder Hausanschluss betrieben, an dem Leistung wesentlich einfacher bereitgestellt werden kann und unbegrenzt zur Verfügung steht - verglichen mit einer Versorgung aus einem Fahrzeugspeicher. Da zum Betreiben des Ladevorgangs weniger Energie aus dem Fahrzeugspeicher benötigt wird, lässt sich die für einen Ladevorgang benötigte Zeitdauer deutlich verkürzen. Weiterhin ist zu berücksichtigen, dass bei hohem Wirkungsgrad des Ladevorgangs bei entsprechender Auslegung des DC-AC-Wandlers sogar überhaupt kein Kühlungsbedarf im Fahrzeug entsteht, so dass auch das Laden von sehr kleinen Strömen wirtschaftlich sinnvoll wird.

Derartige kleine Ströme werden, wie erwähnt, beispielsweise von Photovoltaikanlagen, insbesondere im Teillastbereich, geliefert.

In einer bevorzugten Weiterbildung weist die Ergänzungsladevorrichtung weiterhin einen dritten Anschluss auf, der als DC-Anschluss ausgebildet ist, wobei die Steuervorrichtung ausgebildet ist, über den dritten Anschluss eingehende DC-Leistung in einem dritten Betriebsmodus (Laden Fahrzeugspeicher über DC von Photovoltaikanlage) am DC-Anschluss des ersten Anschlusses und/oder in einem vierten Betriebsmodus (Laden Haus-Batteriespeicher über DC von Photovoltaikanlage) an einem vierten Anschluss der Ergänzungsladevorrichtung als DC-Leistung bereitzustellen, wobei der vierte Anschluss zum Koppeln mit einem Haus-Batteriespeicher ausgebildet ist. Zusätzlich oder alternativ kann in einem fünften Betriebsmodus (Einspeisen Leistung Photovoltaikanlage als AC in ein Hausnetz) die Steuervorrichtung ausgebildet sein, den dritten Anschluss mit dem DC-Anschluss des DC-AC-Wandlers zu koppeln, wobei der AC-Anschluss des DC-AC-Wandlers mit einem fünften Anschluss der Entladungsvorrichtung gekoppelt ist, der mit einem Einspeisepunkt eines Hausnetzes koppelbar ist. Zusätzlich oder alternativ kann die Steuervorrichtung ausgebildet sein, in einem sechsten Betriebsmodus (Einspeisen Leistung Photovoltaikanlage als AC in Fahrzeugspeicher über OnBoard-Charger) ausgebildet sein, den dritten Anschluss mit dem DC-Anschluss des DC-AC-Wandlers zu koppeln, wobei der AC-Anschluss des DC-AC-Wandlers mit dem AC-Anschluss des ersten Anschlusses gekoppelt ist.

Auf diese Weise kann der DC-AC-Wandler der Ergänzungsladevorrichtung als Wechselrichter einer Photovoltaikanlage betrieben werden. Insbesondere für kleiner dimensionierte Photovoltaikanlagen, beispielsweise wenn nicht genügend Dachfläche in einer bevorzugten Orientierung zur Verfügung steht, können damit die Kosten für die Realisierung einer Photovoltaikanlage beträchtlich reduziert werden. Weiterhin wird bei bidirektionaler Auslegung des DC-AC-Wandlers der Ergänzungsladevorrichtung ein besonders schnelles Laden bei gleichzeitiger Nutzung des AC-Pfads und des DC-Pfads, das heißt gleichzeitige AC- und DC-Ladung, ermöglicht.

In einem siebten Betriebsmodus (Bereitstellen AC aus Hausanschluss als DC ins Fahrzeug) kann die Steuervorrichtung ausgebildet sein, den AC-Anschluss des DC/AC-Wandlers mit dem zweiten Anschluss zu koppeln und dessen DC-Anschluss mit dem DC-Anschluss des ersten Anschlusses zu koppeln, so dass über den zweiten Anschluss eingekoppelte Leistung am DC-Anschluss des ersten Anschlusses bereitstellbar ist.

Gemäß einer weiteren bevorzugten Ausführungsform ist die Ergänzungsladevorrichtung mobil ausgebildet, so dass sie beispielsweise in einem Fahrzeug mitgeführt und bei Bedarf eingesetzt werden kann.

Der Entladepfad weist insbesondere nur einen einstufigen DC/AC-Wandler auf.

Bei einer weiteren vorteilhaften Ausführungsform wird vor Schritt a) ein durchschnittlicher elektrischer Grundverbrauch eines Hauses ermittelt, mit dessen Hausanschluss die Ergänzungsladevorrichtung beim Entladen gekoppelt wird, wobei die zweite Nennleistung in Abhängigkeit dieses durchschnittlichen Grundverbrauchs festgelegt wird. Dabei kann die zweite Nennleistung genau dem durchschnittlichen elektrischen Grundverbrauch entsprechen, aber auch - zur Schaffung von Reserven - einen bestimmten Faktor größer gewählt werden. Dieser Faktor kann beispielsweise zwischen 1,1 und 2 betragen.

Weitere vorteilhafte Ausführungsformen finden sich in den Unteransprüchen.

Die vorliegende Erfindung betrifft weiterhin eine AC-DC-Wallbox umfassend eine erfindungsgemäße Ergänzungsladevorrichtung, wobei das Gehäuse der AC-DC-Wallbox das Gehäuse der Ergänzungsladevorrichtung darstellt, wobei die AC-DC-Wallbox einen Anschluss zum Koppeln mit einem Hausnetz oder einem Stromnetz umfasst, wobei die AC-DC-Wallbox eine Steuer- und Schutzvorrichtung umfasst, die eingangsseitig mit dem Anschluss zum Koppeln mit einem Hausnetz oder Stromnetz gekoppelt ist und die ausgangsseitig mit dem zweiten Anschluss der Ergänzungsladevorrichtung gekoppelt ist, wobei zumindest der erste Anschluss der Ergänzungsladevorrichtung als Anschluss der AC-DC-Wallbox ausgebildet ist.

Während bekannte Wallboxen entweder als AC- oder als DC-Wallboxen ausgebildet sind, kann erfindungsgemäß eine AC-DC-Wallbox, das heißt eine hybride Wallbox, bereitgestellt werden. Während die erfindungsgemäße Ergänzungsladevorrichtung als Ergänzung für bestehende, das heißt bereits installierte, AC-Wallboxen gedacht ist, ist eine erfindungsgemäße AC-DC-Wallbox bevorzugt bei einer Neuinstallation, das heißt für den Fall, dass noch keine Wallbox installiert wurde, vorgesehen.

In diesem Zusammenhang ist die Steuervorrichtung bevorzugt ausgebildet, den AC-Anschluss des DC-AC-Wandlers im fünften Betriebsmodus mit dem Anschluss zum Koppeln mit einem Hausnetz oder Stromnetz der AC-DC-Wallbox zu koppeln. Weiterhin bevorzugt sind der dritte und/oder der vierte und/oder der fünfte Anschluss der Ergänzungsladevorrichtung als entsprechende Anschlüsse der AC-DC-Wallbox ausgebildet. Damit ist die Möglichkeit bereitgestellt, auch bei einer erfindungsgemäßen AC-DC-Wallbox, sofern benötigt, die oben genannten weiteren Betriebsmodi umzusetzen.

Zu der Erfindung gehören auch Weiterbildungen der erfindungsgemäßen AC-DC-Wallbox, die Merkmale aufweisen, wie sie bereits im Zusammenhang mit den Weiterbildungen der erfindungsgemäßen Ergänzungsladevorrichtung beschrieben worden sind. Aus diesem Grund sind die entsprechenden Weiterbildungen der erfindungsgemäßen AC-DC-Wallbox hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigen:
- Fig. 1: eine schematische Darstellung zum konventionellen, aus dem Stand der Technik bekannten AC-Laden;
- Fig. 2: eine schematische Darstellung zum aus dem Stand der Technik bekannten Konzept des DC-Ladens und DC-Entladens;
- Fig. 3: eine schematische Darstellung zur Erläuterung des Konzepts einer erfindungsgemäßen Ergänzungsladevorrichtung;
- Fig. 4: den Verlauf des Wirkungsgrads über dem Quotienten aus der Leistung P zur Nennleistung Pₙₒₘ;
- Fig. 5: eine schematische Darstellung eines Ausführungsbeispiels einer erfindungsgemäßen Ergänzungsladevorrichtung sowie einer erfindungsgemäßen AC-DC-Wallbox; und
- Fig.6: eine schematische Darstellung eines weiteren Ausführungsbeispiels einer erfindungsgemäßen Ergänzungsladevorrichtung sowie einer weiteren erfindungsgemäßen AC-DC-Wallbox.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Fig. 3 zeigt eine schematische Darstellung zur Erläuterung des Konzepts, das einer erfindungsgemäßen Ergänzungsladevorrichtung zugrunde liegt. Demnach sind ein Netzanschluss 14 und/oder ein Hausanschluss 16 über einen AC-Pfad 36, der eine AC-Wallbox 82 umfasst, welche hier sehr vereinfacht als Schalter dargestellt ist, zur Bereitstellung einer AC-Leistung über einen Ladeanschluss 40, der einen DC-Anschluss 42 und einen AC-Anschluss 44 umfasst, unter Verwendung eines AC-DC-Ladekabels 46 mit einem Ladeanschluss 60 eines Fahrzeugs 22 koppelbar, der einen DC-Anschluss 48 und einen AC-Anschluss 62 umfasst. Das AC-DC-Ladekabel 46 weist an seinen Enden Anschlüsse 54a, 54b auf, die jeweils einen DC-Anschluss 56a, 56b sowie einen AC-Anschluss 58a, 58b umfassen. Das Konzept umfasst weiterhin einen DC-Pfad 50, der einen DC-AC-Wandler 52 umfasst. Der DC-Anschluss des DC-AC-Wandlers 52 ist mit dem DC-Anschluss 42 des Ladeanschlusses 40 gekoppelt, während der AC-Anschluss des AC-DC-Wandlers 52 mit dem Hausanschluss 16 oder dem Netzanschluss 14 gekoppelt ist.

Erfindungsgemäß ist der AC-Pfad 36 im Hinblick auf eine andere Nennleistung dimensioniert als der DC-Pfad 50. Wie sich aus der Darstellung von Fig. 3 ergibt, ist der AC-Pfad 36 zum Laden eines Batteriespeichers des Fahrzeugs 22 vorgesehen, während der DC-Pfad 50 zum Entladen des Batteriespeichers des Fahrzeugs 22 dient, um diese Leistung dann als AC-Leistung über den Hausanschluss 16 in ein Hausnetz oder über den Netzanschluss 14 in ein Versorgungsnetz einzuspeisen.

Die Nennleistung Pₙₒₘ₁ des Ladepfads 36 beträgt insbesondere zwischen 11 und 22 kW, während die Nennleistung Pₙₒₘ₂ des Entladepfads 50 zwischen 200 W und 5 kW beträgt. Der Wirkungsgrad im Ladepfad ist mit ηₗ bezeichnet, während der Wirkungsgrad im Entladepfad mit ηₑ bezeichnet ist. Erfindungsgemäß wird durch eine Dimensionierung des jeweiligen Pfads auf die darin zu verarbeitende Nennleistung Pₙₒₘ₁, Pₙₒₘ₂ ermöglicht, dass beide Wirkungsgrade ηₗ und ηₑ über 85 Prozent, bevorzugt über 90 Prozent, liegen. Dimensionierung bedeutet hierbei, dass die zur Verarbeitung der entsprechenden Nennleistung Pₙₒₘ₁, Pₙₒₘ₂ benötigten Bauelemente, insbesondere Schalttransistoren, im Hinblick auf die jeweilige Nennleistung Pₙₒₘ₁, Pₙₒₘ₂ gewählt sind.

Um die AC-Wallbox 82 in Betrieb zu setzen, mit anderen Worten "zu stimulieren", muss sich die erfindungsgemäße Ergänzungsladevorrichtung für die AC-Wallbox 82 wie ein Fahrzeug 22 "anfühlen". Aus diesem Grund ist die Ergänzungsladevorrichtung ausgelegt, insbesondere hinsichtlich der Kommunikation mit der AC-Wallbox 82, zumindest einen der drei folgenden Lade-Standards auszuführen:
- IEC 61851-1 (CP- und PRX-Kommunikation), sog. Basiskommunikation;
- ISO15118 (PLC-Kommunikation für AC- und DC-Laden), sog. High-Level-Kommunikation, die für AC-Laden nur Komfortdienste betrifft, für DC-Laden jedoch nötig ist;
- DIN Spec 70121 DC-Laden , der frühere Kommunikationsstandard für DC-Laden.

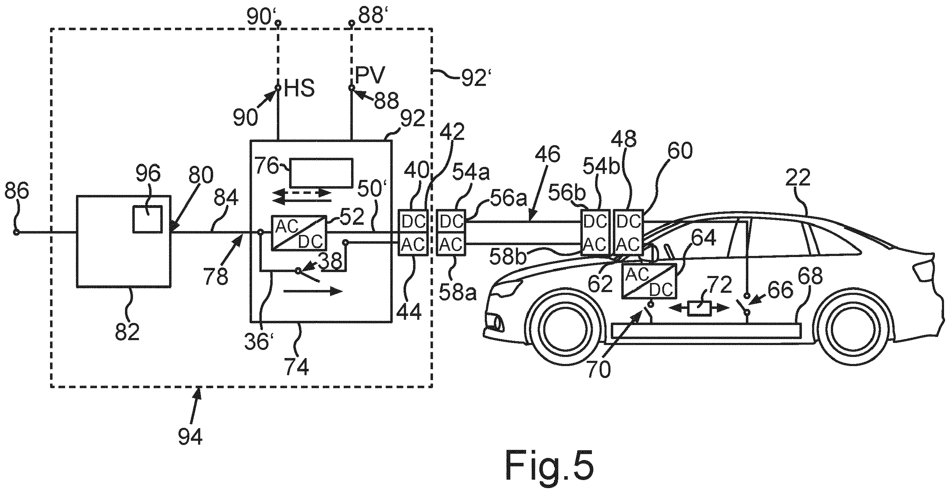

Fig. 3 zeigt zur besseren Verdeutlichung der Parallelität den Lade- und Entladepfad in Parallelanordnung. Tatsächlich ist jedoch eine serielle Anordnung von AC-Wallbox und Ergänzungsladevorrichtung, wie sie weiter unten in Zusammenhang mit Fig. 5 erläutert werden wird, praktikabler. Die Parallelität der beiden Pfade wird dann durch geeignete Schaltmaßnahmen sichergestellt.

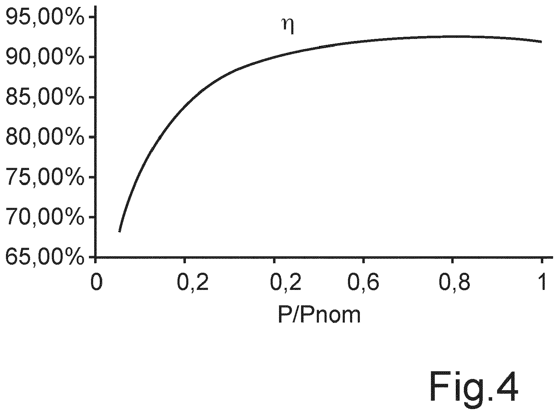

Fig. 4 zeigt schematisch den Verlauf des Wirkungsgrads η in Abhängigkeit des Verhältnisses aus tatsächlich umgesetzter Leistung P zur Nennleistung Pₙₒₘ. Wie der Darstellung zu entnehmen ist, beträgt der Wirkungsgrad ab einem Verhältnis P/Pₙₒₘ gleich 0,4 mehr als 90 Prozent. Für darunterliegende Verhältnisse P/Pₙₒₘ fällt der Wirkungsgrad η rapide ab, wobei er für P/Pₙₒₘ gleich 0,2 etwa 85 Prozent beträgt, für P/Pₙₒₘ gleich 0,1 nur noch 75 Prozent. Hieraus resultiert eine beträchtliche Wirkungsgradverschlechterung bei Teillastbetrieb: Wird der AC-DC-Wandler von Fig. 2 bidirektional ausgelegt und gezwungenermaßen zum Verarbeiten einer Ladeleistung von 11 kW ausgelegt, kann hierdurch ein Wirkungsgrad beim Laden des Fahrzeugs 22 von etwa 90 Prozent erzielt werden. Beim Entladen mit einer Entladeleistung von 0,5 kW sinkt der Wirkungsgrad jedoch auf 65 Prozent ab. Demnach ergeben sich hohe Verluste bei einer Entladeleistung von 0,5 kW oder darunter mit einem AC-DC-Wandler, der optimiert ist auf einen hohen Wirkungsgrad beim Laden mit 11 kW Nennleistung.

Wird bei dem Konzept gemäß Fig. 3 der Ladepfad 36 auf 11 kW Nennleistung Pₙₒₘ₁ ausgelegt und der Entladepfad 50 auf 2 kW Nennleistung Pₙₒₘ₂, so kann beim Entladen mit einer Leistung von 0,5 kW ein Wirkungsgrad ηₑ von mehr als 85 Prozent realisiert werden. Im Vergleich zu dem Konzept von Fig. 2 lässt sich somit eine Wirkungsgradverbesserung durch das Vorsehen zweier unterschiedlich ausgelegter antiparalleler Pfade 36, 50 von 20 Prozent erzielen.

Die Darstellung von Fig. 5 zur weiteren Erläuterung des erfindungsgemäßen Konzepts lässt einen OnBoard-Charger 64 erkennen, von dem das wesentliche Bauteil, nämlich ein AC/DC-Wandler dargestellt ist, dessen Eingang mit dem AC-Anschluss 62 des Ladeanschlusses 48 gekoppelt ist und dessen Ausgang über einen Schalter 70 mit einem Batteriespeicher 68 des Fahrzeugs 22 verbindbar ist. Der DC-Anschluss 60 des fahrzeugseitigen Ladeanschlusses 48 kann über einen Schalter 66 mit dem Batteriespeicher 68 gekoppelt werden. Eine Steuervorrichtung zum Bedienen der Schalter 70 und 66 ist mit 72 bezeichnet.

Eine erfindungsgemäße Ergänzungsladevorrichtung ist mit 74 bezeichnet und umfasst die in Zusammenhang mit Fig. 3 vorgestellten Komponenten. Sie weist ein Gehäuse 92 auf, in dem die Steuervorrichtung 76 sowie ein Teil 36' des AC-Pfads 36 und ein Teil 50' des DC-Pfads 50 angeordnet sind. Mittels eines gestrichelt eingezeichneten Pfeils ist zum Ausdruck gebracht, dass der DC-AC-Wandler 52 auch bidirektional ausgebildet sein kann. Die Ergänzungsladevorrichtung 74 umfasst eine Steuervorrichtung 76, die Schalter und Anschlüsse der Ergänzungsladevorrichtung 74 ansteuern kann, wie weiter unten noch detaillierter dargestellt werden wird. Die Ergänzungsladevorrichtung 74 weist einen Anschluss 78 auf zum Koppeln mit einem AC-Ausgang 80 einer AC-Wallbox 82 über ein AC-Ladekabel 84. Die AC-Wallbox 82 weist ihrerseits einen Anschluss 86 an eine Wechselspannungsversorgung, beispielsweise ein Hausnetz oder ein Versorgungsnetz, auf. Die Ergänzungsladevorrichtung 74 weist einen DC-Anschluss 88 zum Anschließen einer Photovoltaikanlage sowie einen DC-Anschluss 90 zum Anschließen eines Haus-Batteriespeichers auf.

Die Steuervorrichtung 76 ist ausgelegt, in einem ersten Betriebsmodus den AC-Anschluss des AC-DC-Wandlers 52 mit dem Anschluss 78 zu koppeln und den DC-Anschluss des DC-AC-Wandlers 52 mit dem DC-Anschluss 40 des Anschlusses 42 zu koppeln. Auf diese Weise wird ein Entladen des Batteriespeichers 68 in ein Versorgungsnetz oder ein Hausnetz ermöglicht. Demnach kann der Anschluss 78 der Ergänzungsladevorrichtung 74 ohne weitere Anpassung mit dem Anschluss 80 einer serienmäßigen Wallbox 82 gekoppelt werden. Mit anderen Worten kann so beim Entladen des Speichers 68 ein negativer Strom vom Speicher 68 durch die Ergänzungsladevorrichtung 74, weiter durch die Wallbox 82 zum Anschluss 86 einer Wechselspannungsversorgung fließen.

Zum Laden des Batteriespeichers mit AC-Leistung wird der Schalter 38 geschlossen und eine in den Anschluss 86 eingespeiste AC-Leistung am AC-Anschluss 44 des Anschlusses 42 bereitgestellt. Über den Anschluss 88 eingehende DC-Leistung kann in einem dritten Betriebsmodus am Anschluss 42 des Anschlusses 40 und/oder in einem vierten Betriebsmodus am Anschluss 90 zum Laden eines Haus-Batteriespeichers bereitgestellt werden. In einem fünften Betriebsmodus kann der Anschluss 88 mit dem DC-Anschluss des DC-AC-Wandlers 52 gekoppelt werden, wobei der AC-Anschluss des DC-AC-Wandlers mit dem Anschluss 78 gekoppelt wird, um DC-Leistung von einer Photovoltaikanlage als AC-Leistung in ein Hausnetz oder Versorgungsnetz einzuspeisen. In einem sechsten Betriebsmodus wird der Anschluss 88 mit dem DC-Anschluss des DC-AC-Wandlers 52 gekoppelt, wobei der AC-Anschluss des DC-AC-Anschlusses 52 mit dem AC-Anschluss 44 gekoppelt wird, um DC-Leistung einer Photovoltaikanlage als AC-Leistung über den OnBoard-Charger 64 im Batteriespeicher 68 zu speichern. In einem siebten Betriebsmodus wird der AC-Anschluss des DC-AC-Wandlers 52 mit dem Anschluss 78 gekoppelt und der DC-Anschluss des DC-AC-Wandlers 52 mit dem DC-Anschluss 42 des Anschlusses 40, sodass über den zweiten Anschluss eingekoppelte AC-Leistung als DC-Leistung am DC-Anschluss 42 des Anschlusses 40 bereitstellbar ist.

Zur Realisierung einer erfindungsgemäßen AC-DC-Wallbox 94 kann das Gehäuse 92 so groß ausgebildet sein, siehe das Gehäuse 92`, dass darin neben der Ergänzungsladevorrichtung 74 Komponenten einer herkömmlichen AC-Wallbox 82 untergebracht werden können. Entsprechend sind die Anschlüsse 88 und 90 als Anschlüsse 88' und 90' am Gehäuse 92` bereitgestellt. Der Anschluss 40 ist als Anschluss des Gehäuses 92` ausgebildet, ebenso wie der Anschluss 86.

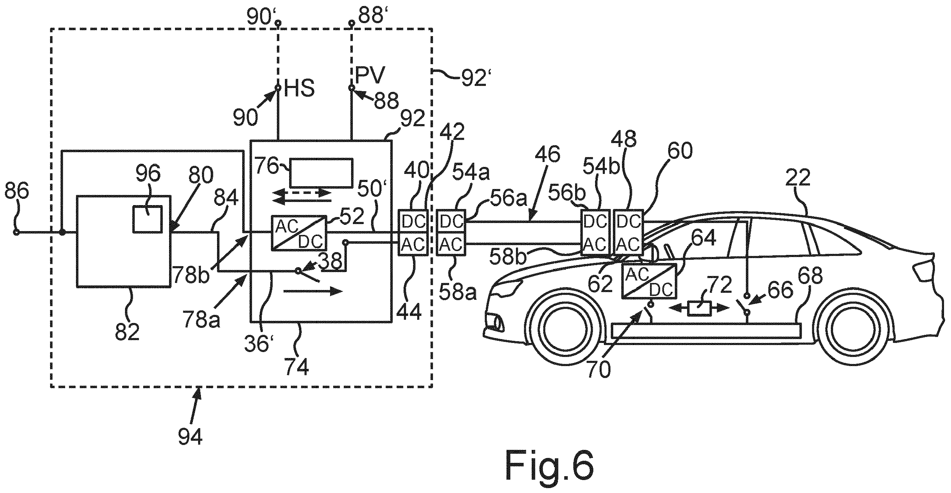

Gemäß einer in Fig. 6 dargestellten alternativen Ausführungsform kann der Anschluss 78b der Ergänzungsladevorrichtung 74 unter Umgehung der AC-Wallbox 82 mit dem Anschluss 86 der AC-DC-Wallbox 94 gekoppelt sein, wobei der Anschluss 80 der AC-Wallbox 82 mit einem Anschluss 78a der Ergänzungsladevorrichtung 74 gekoppelt ist. Der Anschluss 78a der Ergänzungsladevorrichtung 74 ist mit dem Schalter 38 gekoppelt. Auf diese Weise fließt beim Laden des Batteriespeichers 68 ein Strom vom Anschluss 86, durch die AC-Wallbox 82 zum Anschluss 80, von dort über das AC-Kabel 84 zum Anschluss 78a, und von dort, wie im Zusammenhang mit Fig. 3 beschrieben, in den Batteriespeicher 68. Beim Entladen fließt ein Strom vom Batteriespeicher 68, wie ebenfalls beschrieben, zum Anschluss 42 des Anschlusses 40 der Ergänzungsladevorrichtung 74, von dort zum DC-Anschluss des DC-AC-Wandlers 52 und vom AC-Anschluss des AC-DC-Wandlers 52 zum Anschluss 78b der Ergänzungsladevorrichtung 74. Schließlich fließt der Strom vom Anschluss 78b unter Umgehung der AC-Wallbox 82 an den Anschluss 86. Diese Variante ist zu verwenden, wenn die AC-Wallbox 82 keinen negativen Strom toleriert.

Die vorliegende Erfindung kann einer weiteren Problematik Rechnung tragen: Bei aus dem Stand der Technik bekannten bidirektional arbeitenden DC-Wallboxen kann mangels Energieversorgung bei einem Netzausfall ein Kraftfahrzeug durch die DC-Wallbox nicht animiert werden zur Rückspeisung von Energie aus dem Batteriespeicher des Kraftfahrzeugs in ein Hausnetz. Die DC-Wallbox bräuchte hierzu nämlich eine Energieversorgung zur Kommunikation mit dem Kraftfahrzeug, insbesondere deren Steuervorrichtung, die die Entladung des Batteriespeichers steuert. Demnach liegt grundsätzlich in so einem Fall keine sogenannte Schwarz-Start-Fähigkeit vor. Im Stand der Technik sind, um diese dennoch bereitzustellen, häufig Batterien oder Akkumulatoren in der DC-Wallbox verbaut. Diese sind jedoch wartungsintensiv, da sie bei Alterung getauscht werden müssen. Überdies nehmen die Batterien oder Akkumulatoren Platz ein, der zu einer unerwünschten Vergrößerung des Bauraums führt.

Zur Lösung dieser Problematik kann bei einer Ausführungsform einer erfindungsgemäßen Ergänzungsladevorrichtung 74 vorgesehen sein diese über ihren AC-Kontakt 44 sowie das AD-DC-Ladekabel 46 aus dem AC-Anschluss 62 des Fahrzeugs 22 mit Energie zu versorgen. Zu diesem Zweck kann im Fahrzeug 22 die Bereitstellung von AC-Energie an die Ergänzungsladevorrichtung 74 initiiert werden, beispielsweise durch einen Schalter oder Taster im Ladeanschluss 48 oder eine Bedienoption vom Fahrzeuginnenraum aus, beispielsweise durch Anzeigen einer entsprechenden Option "Notstrom an " zur Auswahl durch einen Benutzer auf einer Anzeigevorrichtung des Fahrzeugs 22. Bei Aktivierung der Option zur Bereitstellung von AC-Energie wird zunächst durch die Steuervorrichtung 72 der Schalter 70 geschlossen. Daraufhin kann auf dem oben genannten Weg der AC-Kontakt 44 mit AC-Energie versorgt werden. Damit "erwacht" die Ladungsergänzungsvorrichtung und schließt ihrerseits den Schalter 38. Die Ergänzungsladevorrichtung 74 kann dann ihrerseits die AC-Wallbox 82 stimulieren, um so sequentiell den DC-Pfad 50' zum Rückspeisen von Energie aus dem Batteriespeicher 68 des Kraftfahrzeugs 22 zum Anschluss 86 zum Koppeln mit einem Hausnetz aufzubauen. Insbesondere wird Energie aus dem AC-Pfad 36' verwendet, um die Spannungen und Signale zu erzeugen, die das Fahrzeug 22, insbesondere deren Steuervorrichtung 72 gemäß den oben genannten Lade-Standards erwartet, um den Schalter 66 zu schließen und so die Rückspeisung von DC-Energie aus dem Batteriespeicher 68 in ein Hausnetz zu ermöglichen. Somit kann hier Energie aus dem Kraftfahrzeug 22 genutzt werden, um die Rückspeisefähigkeit bereitzustellen..

In einer weiteren Ausführungsform kann die Ergänzungsladevorrichtung 74 eine 230V-Steckdose umfassen, die mit dem AC-Anschluss des AC/DC-Wandlers 52 gekoppelt ist, um im Falle eines Netzausfalls zumindest ein Gerät mit niedriger Leistung aus dem Fahrzeugspeicher 68 über den DC-Pfad 50' mit Energie zu versorgen.

## Patentansprüche

1. Ergänzungsladevorrichtung (74) für eine AC-Wallbox (82),
**dadurch gekennzeichnet, dass** sie umfasst:
- ein Gehäuse (92);
- eine in dem Gehäuse (92) angeordnete Steuervorrichtung (76);
- einen ersten Anschluss (40) zum Koppeln mit einem Ladeanschluss (60) eines Fahrzeugs (22), wobei der erste Anschluss (40) einen AC-Anschluss (44) und einen DC-Anschluss (42) umfasst;
- einen zweiten Anschluss (78) zum Koppeln mit einem AC-Ausgang (80) der AC-Wallbox (82) über ein AC-Ladekabel (84), wobei die Steuervorrichtung (76) ausgelegt ist, den zweiten Anschluss (78) mit dem AC-Anschluss (44) des ersten Anschlusses (40) zu koppeln;
- einen zumindest monodirektional ausgebildeten DC/AC-Wandler (52), wobei die Steuervorrichtung (76) ausgelegt ist, in einem ersten Betriebsmodus dessen AC-Anschluss mit dem zweiten Anschluss (78) zu koppeln und dessen DC-Anschluss mit dem DC-Anschluss des ersten Anschlusses (40) zu koppeln, so dass über den DC-Anschluss des DC/AC-Wandlers (52) eingekoppelte Leistung am zweiten Anschluss (78) bereitstellbar ist.

2. Ergänzungsladevorrichtung (74) nach einem der vorhergehenden Ansprüche,
**dadurch gekennzeichnet,**
**dass** die Steuervorrichtung (78) ausgebildet ist, in einem zweiten Betriebsmodus am zweiten Anschluss (78) eingekoppelte Leistung am AC-Anschluss (44) des ersten Anschlusses (40) bereitzustellen.

3. Ergänzungsladevorrichtung (74) nach Anspruch 2,
**dadurch gekennzeichnet,**
**dass** die Ergänzungsladevorrichtung (74) zum Laden einer mit dem AC-Anschluss (44) des ersten Anschlusses (40) gekoppelten Speichervorrichtung (68), insbesondere im zweiten Betriebsmodus, auf eine erste Nennleistung (Pₙₒₘ₁) ausgelegt ist, wobei die Ergänzungsladevorrichtung (74) weiterhin zum Entladen einer mit dem DC-Anschluss (42) des ersten Anschlusses (40) gekoppelten Speichervorrichtung (68), insbesondere im ersten Betriebsmodus, auf eine zweite Nennleistung (Pₙₒₘ₂) ausgelegt ist, wobei die erste Nennleistung (Pₙₒₘ₁) größer ist als die zweite Nennleistung (Pₙₒₘ₂), wobei die erste Nennleistung (Pₙₒₘ₁) insbesondere zwischen 11 und 22 kW beträgt und die zweite Nennleistung (Pₙₒₘ₂) insbesondere zwischen 200W und 5 kW.

4. Ergänzungsladevorrichtung (74) nach einem der vorhergehenden Ansprüche,
**dadurch gekennzeichnet,**
**dass** der erste Anschluss (40) ausgebildet ist, in einem einzigen Steckvorgang mit dem Ladestecker (54a) eines AC-DC-Ladekabels (46) gekoppelt zu werden oder
**dass** die Ergänzungsladevorrichtung (74) ein AC-DC-Ladekabel (46) umfasst, wobei das AC-DC-Ladekabel (46) einen Anschluss (54b) als den ersten Anschluss aufweist, der ausgebildet ist, in einem einzigen Steckvorgang mit einem Ladeanschluss (60) eines Fahrzeugs (22) gekoppelt zu werden.

5. Ergänzungsladevorrichtung (74) nach einem der vorhergehenden Ansprüche,
**dadurch gekennzeichnet,**
**dass** der DC/AC-Wandler (52) nur monodirektional betreibbar oder bidirektional betreibbar ausgebildet ist.

6. Ergänzungsladevorrichtung (74) nach einem der vorhergehenden Ansprüche,
**dadurch gekennzeichnet,**
**dass** die Ergänzungsladevorrichtung (74) weiterhin einen dritten Anschluss (88) aufweist, der als DC-Anschluss ausgebildet ist, wobei die Steuervorrichtung (76) ausgebildet ist,
- über den dritten Anschluss (88) eingehende DC-Leistung in einem dritten Betriebsmodus am DC-Anschluss (42) des ersten Anschlusses (40) und/oder in einem vierten Betriebsmodus an einem vierten Anschluss (90) der Ergänzungsladevorrichtung (74) als DC-Leistung bereitzustellen, wobei der vierte Anschluss (90) zum Koppeln mit einem Haus-Batteriespeicher ausgebildet ist, und/oder
- in einem fünften Betriebsmodus den dritten Anschluss (88) mit dem DC-Anschluss des DC/AC-Wandlers (52) zu koppeln, wobei der AC-Anschluss des DC/AC-Wandlers (52) mit einem fünften Anschluss (78) der Ergänzungsladevorrichtung (74) gekoppelt ist, der mit einem Einspeisepunkt eines Hausnetzes koppelbar ist und/oder
- in einem sechsten Betriebsmodus den dritten Anschluss (88) mit dem DC-Anschluss des DC/AC-Wandlers (52) zu koppeln, wobei der AC-Anschluss des DC/AC-Wandlers (52) mit dem AC-Anschluss (44) des ersten Anschlusses (40) gekoppelt ist.

7. Ergänzungsladevorrichtung (74) nach einem der vorhergehenden Ansprüche,
**dadurch gekennzeichnet,**
**dass** die Steuervorrichtung (76) ausgebildet ist, in einem siebten Betriebsmodus den AC-Anschluss des DC/AC-Wandlers (52) mit dem zweiten Anschluss (78) zu koppeln und dessen DC-Anschluss mit dem DC-Anschluss (42) des ersten Anschlusses (40) zu koppeln, so dass über den zweiten Anschluss (78) eingekoppelte Leistung am DC-Anschluss (42) des ersten Anschlusses (40) bereitstellbar ist.

8. Ergänzungsladevorrichtung (74) nach einem der vorhergehenden Ansprüche,
**dadurch gekennzeichnet,**
**dass** vor Schritt a) ein durchschnittlicher elektrischer Grundverbrauch eines Hauses ermittelt, mit dessen Hausanschluss die Ergänzungsladevorrichtung beim Entladen gekoppelt wird, wobei die zweite Nennleistung in Abhängigkeit dieses durchschnittlichen Grundverbrauchs festgelegt wird.

9. AC-DC-Wallbox (94) umfassend eine Ergänzungsladevorrichtung (74) nach einem der vorhergehenden Ansprüche,
**dadurch gekennzeichnet,**
**dass** das Gehäuse (92`) der AC-DC-Wallbox (94) das Gehäuse (92) der Ergänzungsladevorrichtung (74) darstellt,
wobei die AC-DC-Wallbox (94) einen Anschluss (86) zum Koppeln mit einem Hausnetz oder Stromnetz umfasst,
wobei die AC-DC-Wallbox (94) eine Steuer- und Schutzvorrichtung (96) umfasst, die eingangsseitig mit dem Anschluss (86) zum Koppeln mit einem Hausnetz oder Stromnetz gekoppelt ist und die ausgangsseitig mit dem zweiten Anschluss (78) der Ergänzungsladevorrichtung (74) gekoppelt ist,
wobei zumindest der erste Anschluss (40) der Ergänzungsladevorrichtung (74) als Anschluss der AC-DC-Wallbox (94) ausgebildet ist.

10. AC-DC-Wallbox (94) nach Anspruch 8,
**dadurch gekennzeichnet,**
**dass** die Steuervorrichtung (76) ausgebildet ist, den AC-Anschluss des DC/AC-Wandlers (52) im fünften Betriebsmodus mit dem Anschluss (86) zum Koppeln mit einem Hausnetz oder Stromnetz der AC-DC-Wallbox (94) zu koppeln.

11. AC-DC-Wallbox (94) nach einem der Ansprüche 8 oder 9,
**dadurch gekennzeichnet,**
**dass** der dritte (88) und/oder der vierte (90) und/oder der fünfte Anschluss (78) der Ergänzungsladevorrichtung (74) als entsprechende Anschlüsse (88`, 90`, 86) der AC-DC-Wallbox (94) ausgebildet sind.
